# EUROPÄISCHE PATENTSCHRIFT

(11) **EP 2 347 496 B1**
(45) Veröffentlichungstag und Bekanntmachung des Hinweises auf die Patenterteilung: **27.11.2013**
(21) Anmeldenummer: 09748724.3
(22) Anmeldetag: 07.10.2009
(51) Int. Cl.: H02K 3/26, H02K 9/22

(54) **Linearmotor mit einer Leiteranordnung sowie Verfahren zu deren Kühlung**
Linearmotor with a conductor arrangement and method for its cooling
Moteur linéaire avec agencement de conducteurs et procédé pour leur refroidissement

(30) Priorität: 22.10.2008 DE 102008052627
(43) Veröffentlichungstag der Anmeldung: 27.07.2011
(73) Patentinhaber: ITK Dr. Kassen GmbH, 35633 Lahnau (DE)
(72) Erfinder: KASSEN, Folkert, 35633 Lahnau-Atzbach (DE)
(74) Vertreter: advotec.
(86) Internationale Anmeldenummer: PCT/EP2009/063008
(87) Internationale Veröffentlichungsnummer: WO 2010/046231

(56) Entgegenhaltungen:
- EP-A1- 0 619 639
- WO-A1-2008/093773
- CH-A5- 665 303
- US-A- 5 486 728
- US-A1- 2004 032 170

## Beschreibung

Die Erfindung betrifft einen Linearmotor mit einer Leiteranordnung nach dem Oberbegriff des Anspruchs 1 sowie ein Verfahren zur Kühlung eines derartigen Linearmotors.

Leiteranordnungen sind hinreichend bekannt und finden insbesondere in Elektromotoren oder Generatoren als ein Bauteil eines Stators bzw. Rotors oder als ein translatorisch bewegbares Bauteil Verwendung. Spulen der Leiteranordnung dienen einer Ausbildung eines magnetischen Feldes, welches relativ zu einem weiteren magnetischen Feld bewegbar ist und so eine Umwandlung elektrischer Energie in eine Bewegung bzw. eine Umwandlung einer Bewegung in elektrische Energie ermöglicht. Da die Spule von einem Strom durchflossen wird, erfolgt aufgrund des Materialwiderstandes der Spule eine Erwärmung derselben. Insbesondere bei einem Betrieb der elektrischen Maschine unter Dauerlast kann sich die Leiteranordnung derart erwärmen, dass eine Spule zerstört wird. Eine Dauerleistung der elektrischen Maschine ist daher unter anderem durch eine Maximaltemperatur der Leiteranordnung, welche nicht zu einer Zerstörung der Leiteranordnung führt, begrenzt, wobei die Maximaltemperatur von der durch die Leiteranordndung durchgeleiteten Stromdichte abhängig ist. Erfolgt eine mittels Rotation bzw. Bewegung bewirkte Luftkühlung der Leiteranordnung bzw. der Spulen, kann die Stromdichte und somit die Dauerleistung der elektrischen Maschine erhöht werden.

Eine Kühlung ist insbesondere dann schwierig, wenn die Leiteranordnung ein Bauteil eines Linear - oder Torquemotors ist. Regelmäßig weisen diese Motoren magnetisch wirksame Bauteile auf, die ein- oder beidseitig der Leiteranordnung angeordnet sind. So werden beispielsweise U-förmige Magnete oder ähnliche Anordnungen von Magneten verwandt, in deren Zwischenraum die Leiteranordnung bewegt wird. Ein Abstand zwischen der Leiteranordnung und den magnetisch wirksamen Bauteilen ist zur Erzielung eines hohen Wirkungsgrades vergleichsweise gering bemessen. Da diese Motoren als ein Vorteil eine relativ klein bauende Gestaltung ermöglichen, ist es wünschenswert, die Leiteranordnung soweit als möglich zu miniaturisieren. Auch können so verbesserte dynamische Eigenschaften der Motoren aufgrund einer Gewichtsersparnis erreicht werden. Die aus dem Stand der Technik bekannten Motoren dieser Art verwenden daher Leiteranordnungen, die aus einer Mehrzahl gewickelter und in einer Reihe nebeneinander angeordneter Spulen gebildet sind, wobei die Spulen in einem dielektrischen Vergussmaterial bzw. einem Kunststoff aufgenommen und gehaltert werden. Somit ist eine vergleichsweise schmale Ausbildung der Leiteranordnung mit einer relativ großen magnetisch wirksamen Fläche möglich.

Jedoch gestaltet sich hier eine Kühlung der Leiteranordnung besonders schwierig, da ein Spalt zwischen der Leiteranordnung und den magnetisch wirksamen Bauteilen gegenüber der magnetisch wirksamen Fläche sehr klein ist, so dass kaum Luft in dem Spalt zirkulieren kann. Auch verhindert das Vergussmaterial eine direkte Kühlung der Spulen, so dass bei einer hohen Temperatur ein Kurzschluss eines Leiters oder eine Verformung des Vergussmaterials und somit eine Beschädigung der Leiteranordnung eine Folge sein kann. Aus dem Stand der Technik ist es daher bekannt, derartige Motoren bzw. deren Leiteranordnungen zur Erzielung einer höheren Dauerleistung mit zusätzlichen Gebläseeinrichtungen oder Kühlleitungen, welche zusammen mit den Spulen vergossen werden, zu kühlen. In jedem Fall erfolgt immer eine indirekte Kühlung der Spulen, wobei insbesondere dass Vergussmaterial gegenüber dem metallischen Leiter eine vergleichsweise schlechte Wärmeleitfähigkeit aufweist. Insbesondere bei Kühltechniken, die in einem Randbereich der Leiteranordnung, welcher zur Halterung der Leiteranordnung genutzt wird, zur Wärmeabführung angeordnet werden, ergibt sich ein relativ hoher Temperaturgradient zwischen dem Randbereich und einem Überdeckungsbereich der Leiteranordnung mit den magnetisch wirksamen Bauteilen. Die mit den Spulen vergossenen Kühlleitungen ermöglichen hier zwar eine Verbesserung, jedoch steht dadurch weniger Raum, bezogen auf einen Querschnitt der Leiteranordnung, zur Ausbildung von Spulen zur Verfügung und die Leiteranordnung ist wartungsanfällig sowie relativ teuer in der Herstellung.

Aus der WO 2008/093773 A1 ist ein Elektromotor mit einem kreisringförmigen Träger und darin vergossenen Leitersträngen bekannt. Die Leiterstränge sind in einer Dreh- bzw. Bewegungsrichtung des Trägers mäanderförmig angeordnet, wobei ein parallel zu der Bewegungsrichtung angeordneter äußerer Leiterabschnitt einen Querschnitt aufweist, der größer ist als der Querschnitt der übrigen, inneren Leiterabschnitte. Weiter ist der Träger in einem äußeren Randbereich so zwischen Gehäuseteilen des Motors befestigt, dass die äußeren Leiterabschnitte zumindest teilweise in dem Gehäuse aufgenommen bzw. von diesem überdeckt werden. Der Träger weist drei Ebenen auf, in denen die Leiterstränge angeordnet sind. Insbesondere in einem zwischen Magneten angeordneten Bereich des Trägers bildet der Träger eine einzige Ebene aus, durch die alle Leiterstränge hindurch laufen.

Die EP 0 619 639 A1 offenbart einen Linearmotor sowie einen Synchronmotor mit einer Leiteranordnung auf einem kreisringförmigen Träger, wobei äußere Leiterabschnitte von Wicklungen einen vergrößerten Querschnitt aufweisen. Die Wicklungen sind übereinander geschichtet, wobei jede Schicht einen Wicklungsstrang bildet. Die Leiterabschnitte werden insbesondere mittels eines elektrochemischen Verfahrens ausgebildet.

Die CH 665 309 A5 betrifft ebenfalls einen derartigen Motor mit einer Leiteranordnung, wobei hier in einem Substrat eines Trägers Durchkontaktierungen vorgesehen sind.

Die US 5,486,728 beschreibt einen Mikromotor mit einer im Wesentlichen konventionellen Spulenanordnung, bei dem eine Abführung von Wärmeenergie mittels Peltierelementen erfolgt.

Die US 2004/0032170 A1 zeigt einen Linearmotor mit einer Leiteranordnung innerhalb eines Kunstharzträgers in Form konventioneller Spulen. In dem Kunstharzträger ist zwischen den Spulen ein Element zur Ableitung von Wärmeenergie mittels Wärmerohren angeordnet.

Es ist daher Aufgabe der Erfindung, einen Linearmotor mit einer Leiteranordnung sowie ein Verfahren zur Kühlung vorzuschlagen, der eine verbesserte Dynamik aufweist bzw. das eine einfache Abführung von Wärmeenergie der Leiteranordnung ermöglicht.

Diese Aufgabe wird durch eine Vorrichtung mit den Merkmalen des Anspruchs 1 und ein Verfahren mit den Merkmalen des Anspruchs 11 gelöst.

Der erfindungsgemäße Linearmotor umfasst eine Leiteranordnung, wobei die Leiteranordnung relativ zu magnetisch wirksamen Bauteilen des Linearmotors bewegbar ist, wobei die Leiteranordnung aus zumindest einem elektrischen Leiter und einem Träger zur räumlichen Positionierung des Leiters gebildet ist, wobei der Träger der Leiteranordnung geradförmig ausgebildet ist, wobei der Leiter zumindest einen Leiterstrang aufweist und in Art einer Spule angeordnet ist, wobei der Leiterstrang Leiterabschnitte aufweist, die zumindest abschnittsweise quer und parallel zu einer Bewegungsrichtung des Trägers bzw. der Bauteile angeordnet sind, wobei mehrere Leiterstränge jeweils in parallelen Ebenen des Trägers ausgebildet sind, wobei zumindest ein parallel zu der Bewegungsrichtung angeordneter äußerer Leiterabschnitt einen Querschnitt aufweist, der größer ist als der Querschnitt der übrigen Leiterabschnitte, wobei der Leiterstrang relativ und quer zur Bewegungsrichtung mäanderförmig angeordnet ist, wobei mehrere Leiterstränge in einer Ebene des Trägers relativ zueinander parallel angeordnet sind.

Da der Querschnitt des äußeren Leiterabschnitts vergleichsweise größer ist als der Querschnitt der übrigen Leiterabschnitte wird eine Konzentration von Wärmeenergie der Leiteranordnung in einem Randbereich parallel zur Bewegungsrichtung ermöglicht. Da es ohnehin einer geeigneten Halterung der Leiteranordnung in einem Randbereich der Leiteranordnung bedarf, ist die Wärmeenergie aus dem Randbereich der Leiteranordnung einfach abführbar. Die vorteilhafte Konzentration der Wärmeenergie ist insbesondere dadurch erzielbar, dass eine Wärmekapazität des äußeren Leiterabschnitts aufgrund des größeren Querschnitts und folglich einer größerer Masse größer ist als eine Wärmekapazität der übrigen Leiterabschnitte. Bei einer Erwärmung der Leiterabschnitte ergibt sich ein Temperaturgradient zwischen dem äußeren Leiterabschnitt und den übrigen Leiterabschnitten, der einen Wärmestrom in den äußeren Leiterabschnitt bewirkt. Der äußere Leiterabschnitt dient somit zur Wärmeabführung von Wärmeenergie aus den übrigen Leiterabschnitten und daher zur unmittelbaren Kühlung der Leiterabschnitte durch die Leiterabschnitte selbst bzw. den äußeren Leiterabschnitt. Eine derart vorteilhafte, unmittelbare Abführung der Wärmenergie wäre mit dem vergleichsweise schlecht wärmeleitenden Kunststoffmaterial des Trägers nicht möglich. Insgesamt können der Leiteranordnung so höhere Stromdichten zugeführt werden, wodurch eine höhere Dauerleistung der elektrischen Maschine ermöglicht wird, ohne dass es zu einer beschädigenden Erwärmung der Leiteranordnung kommt.

Erfindungsgemäß ist der Leiterstrang relativ und quer zur Bewegungsrichtung mäanderförmig angeordnet. So kann auf ein Wickelverfahren zur Ausbildung einer Spule verzichtet werden, und die Spule kann flach und über eine nahezu beliebige Länge der Leiteranordnung mit alleine einem Leiter ausgebildet werden.

Erfindungsgemäß sind mehrere Leiterstränge in einer Ebene des Trägers relativ zueinander parallel angeordnet. Durch die parallele Anordnung der Leiterstränge kann eine einfache Anpassung der Spule bzw. Spulen an Leistungserfordernisse der elektrischen Maschine ermöglicht werden. Beispielsweise können so auch Leiteranordnungen ausgebildet werden, die einen zweiphasigen bzw. dreiphasigen Betrieb der elektrischen Maschine ermöglichen.

Erfindungsgemäß sind mehrere Leiterstränge in parallelen Ebenen des Trägers ausgebildet. Durch die in Bewegungsrichtung übereinander liegend angeordneten Leiterstränge kann ein spulenartiger Aufbau der Leiteranordnung ermöglicht werden.

Der erfindungsgemäße Träger der Leiteranordnung ist geradförmig ausgebildet, beispielsweise rechteckig oder quadratisch. Die Leiteranordnung kann dann als ein Bauteil zur Ausbildung des Linearmotors verwendet werden.

In einer Ausführungsform können jeweils zwei relativ zu der Bewegungsrichtung parallel gegenüberliegend angeordnete äußere Leiterabschnitte einen Querschnitt aufweisen, der größer ist als der Querschnitt der übrigen Leiterabschnitte. Eine derartige Konzentration von Wärmeenergie, beidseitig in Bewegungsrichtung der Leiteranordnung ermöglicht eine noch weiter verbesserte Kühlung der Leiteranordnung.

Auch kann der äußere Leiterabschnitt einen Querschnitt aufweisen, der um ein Vielfaches größer ist als der Querschnitt der übrigen Leiterabschnitte. So kann eine Masse des äußeren Leiterabschnitts weiter erhöht werden, was zu einer noch bessern Ableitung von Wärmeenergie aus den übrigen Leiterabschnitten führt. Beispielsweise kann der Querschnitt des äußeren Leiterabschnitts um ein Zwei- bis Zehnfaches größer sein als der Querschnitt der übrigen Leiterabschnitte.

Eine besonders gute Ableitung von Wärmeenergie aus dem äußeren Leiterabschnitt kann ermöglicht werden, wenn der Leiterstrang eine gleichmäßige Höhe aufweist. Somit ergibt sich insbesondere für den äußeren Leiterabschnitt eine im Vergleich zu den übrigen Leiterabschnitten große Fläche, welche eine Abgabe von Wärmeenergie begünstigt.

Eine besonders einfache Ausbildung der Leiterabschnitte wird möglich, wenn der Leiterstrang einen rechteckigen Querschnitt aufweist. Die Spule ist dann, gegenüber Leitersträngen mit runden Querschnitten, besonders einfach herstellbar.

Weiter ist es vorteilhaft, wenn der Träger mehr als zwei Ebenen, vorzugsweise 4 bis 16 Ebenen mit Leitersträngen aufweist. Die Leiteranordnung kann dann sehr flach ausgebildet sein. Beispielsweise bei acht Ebenen mit einer Dicke in einem Bereich von 1 bis 5 mm. Aufgrund Ihrer besonders flachen Ausbildung kann eine derartige Leiteranordnung besonders gut als ein Bauteil für einen Linearmotor genutzt werden. Je nach Anwendungsfall ist grundsätzlich eine nahezu beliebig hohe, sinnvolle Anzahl von Ebenen möglich.

Gleichförmige Leiterstränge unterschiedlicher Ebenen können relativ zueinander in Bewegungsrichtung versetzt ausgebildet sein. Ein Versatz kann beispielsweise 60°, 90° oder 120° zu einer Magnetperiode magnetisch wirksamer Bauteile betragen. Demnach können um diese Beträge versetzte Spulen ausgebildet werden, welche eine Ausbildung einer kontinuierlichen Kraftwirkung bei einem betragsgleichen Strom ermöglichen.

In einer Weiterbildung der Leiteranordnung kann zumindest ein erster Leiterstrang in einer ersten Ebenen des Trägers relativ und quer zur Bewegungsrichtung mäanderförmig angeordnet sein, und weiter zumindest ein zweiter Leiterstrang in einer zweiten Ebene des Trägers relativ und längs zur Bewegungsrichtung mäanderförmig angeordnet sein. Eine derartige Anordnung von Leitersträngen relativ quer zueinander ermöglicht eine Ausbildung einer zweiten Bewegungsrichtung quer zu der ersten Bewegungsrichtung. Somit kann mit der Leiteranordnung eine elektrische Maschine ausgebildet werden, die beispielsweise eine Translation und gleichzeitig eine Rotation, je nach Gestalt des Trägers, ausführen kann. Auch sind zwei translatorische Bewegungsrichtungen denkbar, beispielsweise im Rahmen eines elektrischen Antriebs für einen Kreuztisch.

Weist der Träger der Leiteranordnung einen Überdeckungsbereich auf, der mit den magnetisch wirksamen Bauteilen in Überdeckung bringbar ist, können alle Leiterstränge zumindest teilweise im Überdeckungsbereich angeordnet sein. So kann mittels der Leiteranordnung eine besonders große magnetische Kraftwirkung erzielt bzw. nutzbar gemacht werden.

Weiter kann der Träger der Leiteranordnung einen Randbereich aufweisen, der mit einem Halteelement in Überdeckung bringbar ist, wobei der Randbereich den äußeren Leiterabschnitt zumindest teilweise überdeckt. Dann kann zwischen dem Halteelement und der Leiteranordnung eine besonders vorteilhafte Befestigung der Leiteranordnung an dem Halteelement ausgebildet werden, da im äußeren Leiterabschnitt konzentrierte Wärmeenergie einfach über das Halteelement aus der Leiteranordnung abgeführt werden kann.

Der Leiter der Leiteranordnung kann mittels eines elektrochemischen Verfahrens ausgebildet werden, beispielsweise durch Ätzen einer Leiterplatte. So können Spulen ausgebildet werden, die in einem Vergleich zu den aus dem Stand der Technik bekannten Wickelverfahren eine gleichmäßigere Leiterstruktur mit definierten Abständen von Leiterbahnen aufweisen. Auch können dann Abstände der Leiterbahnen besonders klein und die Leiteranordnung selbst besonders flach ausgebildet werden.

Besonders vorteilhaft ist es, wenn der Leiter auf jeweils gegenüberliegenden Oberflächen des Substrats ausgebildet wird. So sind außerordentlich flache Spulen herstellbar, die, bezogen auf einen Querschnitt der Leiteranordnung, einen besonders großen Anteil elektrisch leitenden Materials aufweisen.

Die vorteilhaft hohe Materialdichte kann weiter erhöht werden, wenn eine Mehrzahl von Substraten unter zwischenliegender Anordnung einer dielektrischen Schicht in Art einer mehrlagigen Leiterplatte miteinander verbunden wird. Eine Verbindung einer derartigen Substratanordnung kann durch Verpressen unter Druck und/oder Temperaturbeaufschlagung der Substratanordnung erfolgen. Vorzugsweise sind die Leiterstränge zur Erzielung einer besonders dünnen Leiteranordnung um ein vielfaches dicker als die dielektrische Schicht, wobei Zwischenräume zwischen den Leitersträngen vom Material der dielektrischen Schicht beim Verpressen verfüllt werden. Auch kann der Träger mit einer dielektrischen Deckschicht versehen werden, welche eine Oberfläche der Leiteranordnung bedeckt und so die Leiteranordnung vor einer unerwünschten elektrischen Kontaktierung schützt.

Eine Verbindung der Leiterstränge kann mittels Durchkontaktierungen im Substrat ausgebildet werden. Durchkontaktierungen können besonders einfach hergestellt werden und ermöglichen eine sichere elektrische Verbindung. Vorzugsweise können die Durchkontaktierungen an Längsenden des Trägers ausgebildet werden.

Bei dem erfindungsgemäßen Verfahren zum Kühlen eines Linearmotors mit einer Leiteranordnung nach einem der Ansprüche 1 bis 10, wird die Wärmeenergie aus dem Randbereich der Leiteranordnung mittels eines Halteelements, eines fluiden Mediums, eines Peltierelements oder eines Wärmerohrs abgeführt.

Insbesondere die Konzentration von Wärmeenergie im Randbereich der Leiteranordnung ermöglicht eine verbesserte Abführung der Wärmeenergie und somit bessere Kühlung der Leiteranordnung. Aufgrund der verbesserten Kühlung der Leiteranordnung ist eine höhere Dauerleistung der elektrischen Maschine erzielbar.

Da die Wärmeenergie aus dem Randbereich der Leiteranordnung abgeführt wird, kann die Dauerleistung der elektrischen Maschine noch weiter erhöht werden. Die Leiteranordnung kann dann ohne Rücksicht auf eine für eine Kühlung geeignete Form der Leiteranordnung ausgebildet werden, da die Kühlung lediglich im Randbereich der Leiteranordnung erfolgt.

Eine Abführung von Wärmeenergie wird vereinfacht, wenn die Abführung mittels des Halteelements erfolgt. Das Halteelement dient dann zur räumlichen Positionierung der Leiteranordnung und kann flächig auf dem Randbereich befestigt werden, beispielsweise durch Verschrauben des Halteelements mit der Leiteranordnung. Wird ein Halteelement mit einer großen Wärmekapazität verwendet, ist eine besonders wirkungsvolle Abführung von Wärmeenergie aus dem Randbereich erzielbar.

Auch kann eine Abführung von Wärmeenergie mittels des fluiden Mediums erfolgen. Das fluide Medium kann den Randbereich der Leiteranordnung, beispielsweise mittels darin ausgebildeten Durchgangsöffnungen, durchströmen oder alternativ alleine das Halteelement kühlen. Eine Kühlung kann so weiter verbessert werden, wobei als ein fluides Medium Gas, Wasser oder eine spezielle Kühlflüssigkeit verwendet werden kann.

Weiter kann eine Abführung von Wärmeenergie mittels des Peltierelements erfolgen. Ein Peltierelement kann aufgrund seines regelmäßig flächigen Aufbaus besonders gut mit dem Randbereich der Leiteranordnung oder einem Halteelement verbunden werden und stellt eine unaufwendige Kühleinrichtung zur Verfügung.

Auch kann eine Abführung von Wärmeenergie mittels des Wärmerohrs erfolgen. Eine derartige Kühleinrichtung ist unabhängig von elektrischer Energie und bedarf daher keiner weiteren Aufwände- bzw. Wartungsarbeiten.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend wird eine bevorzugte Ausführungsform der Erfindung unter Bezugnahme auf die beigefügte Zeichnung näher erläutert.

Es zeigen:
- **Fig. 1**: eine abschnittsweise Darstellung einer ersten Ausführungsform einer Leiteranordnung;
- **Fig. 2**: eine abschnittsweise Darstellung einer zweiten Ausführungsform der Leiteranordnung;
- **Fig. 3**: eine abschnittsweise Darstellung einer dritten Ausführungsform der Leiteranordnung;
- **Fig. 4**: eine schematische Querschnittsdarstellung einer ersten Ausführungsform eines Linearmotors;
- **Fig. 5**: eine schematische Querschnittsdarstellung einer zweiten Ausführungsform eines Linearmotors;
- **Fig. 6**: eine abschnittsweise Querschnittsdarstellung einer vierten Ausführungsform der Leiteranordnung mit einem Halteelement;
- **Fig. 7**: eine nicht der Erfindung zugehörige schematische Darstellung einer ersten Ausführungsform eines Torquemotors;
- **Fig. 8**: eine nicht der Erfindung zugehörige schematische Darstellung einer zweiten Ausführungsform eines Torquemotors.

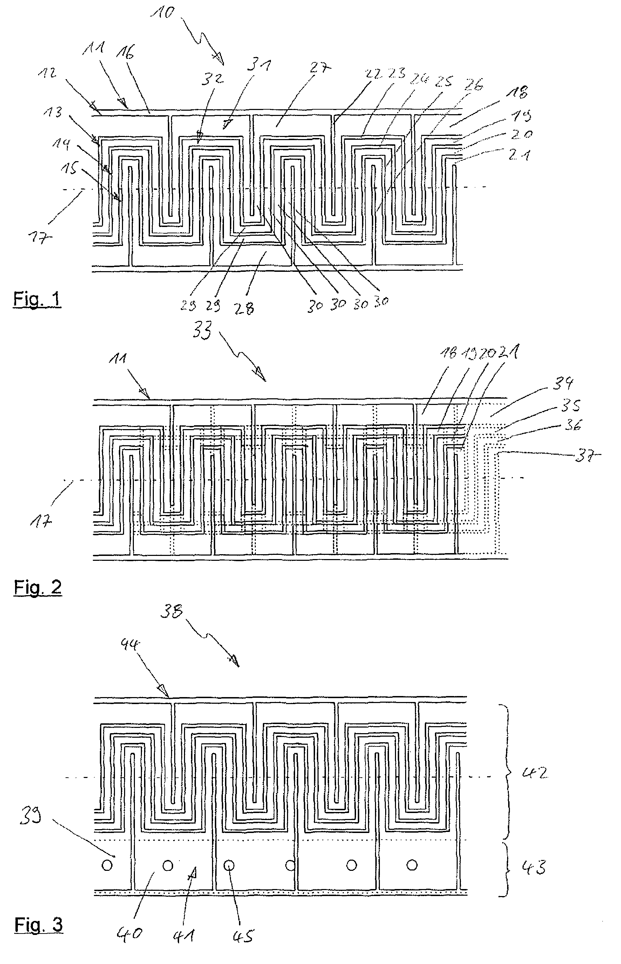

**Fig. 1** zeigt eine erste Ausführungsform einer Leiteranordnung 10 in einer abschnittsweisen Darstellung, wobei die Leiteranordnung 10 aus einem Träger 11 und einer Anzahl von elektrischen Leitern 12, 13, 14 und 15 gebildet ist. Der Träger 11 umfasst eine Leiterplatte 16 aus einem dielektrischen Material, wobei die Leiter 12 bis 15 aus Kupfer bestehen, sowie vergleichsweise flach ausgebildet und mit der Leiterplatte 16 verbunden sind. Die Leiter 12 bis 15 sind im Wesentlichen relativ zueinander parallel angeordnet und erstrecken sich in Richtung einer möglichen translatorischen Bewegung, welche mit einer Linie 17 angedeutet ist. Die Leiter 12 bis 15 bilden jeweils Leiterstränge 18, 19, 20 bzw. 21 mit zwischenliegenden Spalten 22, 23, 24, 25 bzw. 26 aus. Äußere Leiterabschnitte 27 und 28 der Leiterstränge 18 bzw. 21 sind jeweils parallel zur Linie 17, also parallel zu der Bewegungsrichtung, angeordnet, wobei ein hier nicht sichtbarer Querschnitt der äußeren Leiterabschnitte 27 und 28 größer ist als ein Querschnitt von übrigen, parallel zur Linie 17 verlaufenden Leiterabschnitten 29 und quer zur Linie 17 verlaufenden Leiterabschnitten 30. Da alle Leiterabschnitte 27 bis 30 eine gleichmäßige Höhe aufweisen, ist folglich eine Fläche 31 der äußeren Leiterabschnitte 27 und 28 relativ zu einer Länge der äußeren Leiterabschnitte 27 bzw. 28 vergleichsweise größer als eine auf eine Länge bezogene Fläche 32 der Leiterabschnitte 29 bzw. 30. Die äußeren Leiterabschnitte 27 und 28 weisen demnach eine höhere Wärmekapazität als die Leiterabschnitte 29 und 30 auf, so dass bei einer Wärmeentwicklung zumindest in den Leitersträngen 18 und 21, eine Konzentration von Wärmeenergie in den äußeren Leiterabschnitten 27 bzw. 28 erfolgt. Über die Fläche 31 ist diese Wärmeenergie besonders einfach abführbar. Weiter geht Wärmeenergie der Leiterstränge 19 und 20 in die Leiterstränge 18 bzw. 21 über, so dass auch diese Wärmeenergie zumindest teilweise abgeführt werden kann.

**Fig. 2** zeigt eine Leiteranordnung 33, welche die in Fig. 1 beschriebene Leiteranordnung umfasst, wobei auf einer hier nicht gezeigten Rückseite des Trägers 11 weitere, hier punktiert dargestellt, Leiterstränge 34, 35, 36 und 37 ausgebildet sind. Die Leiterstränge 34 bis 37 bilden im Wesentlichen die gleiche Form aus wie die Leiterstränge 18 bis 21, wobei die Leiterstränge 34 bis 37 in Richtung der Linie 17 bzw. der Bewegungsrichtung relativ zu den Leitersträngen 18 bis 21 versetzt angeordnet sind. Der Versatz ist dabei auf eine Magnetperiode hier nicht gezeigter magnetisch wirksamer Bauteile abgestimmt.

Eine dritte Ausführungsform einer Leiteranordnung 38 zeigt Fig. 3, wobei die Leiteranordnung 38 im Unterschied zur Leiteranordnung aus **Fig. 2** einen Leiterstrang 39 mit einem äußeren Leiterabschnitt 40 aufweist, dessen Querschnitt bzw. Fläche 41 um ein Vielfaches größer als die übrigen Leiterabschnitte 27, 29 bzw. 30 ausgebildet ist. Auf einer hier nicht dargestellten Rückseite der Leiteranordnung 38 ist ein ebensolcher Leiterstrang ausgebildet. Die Leiteranordnung 38 weist weiter einen Überdeckungsbereich 42 und einen Randbereich 43 auf, wobei der Randbereich 43 mit einem Großteil der Flächen 41 überlappt. Der Überdeckungsbereich 42 kann mit hier nicht gezeigten magnetisch wirksamen Bauteilen einer elektrischen Maschine, beispielsweise einem Linearmotor, in Überdeckung gebracht werden, wobei der Randbereich 43 zur Halterung eines Trägers 44 der Leiteranordnung 38 und daher zur Verbindung mit einem hier nicht gezeigten Halteelement dient. Durchgangsbohrungen 45 im Träger 44 sind insbesondere zur Befestigung des Halteelements am Träger 44 vorgesehen.

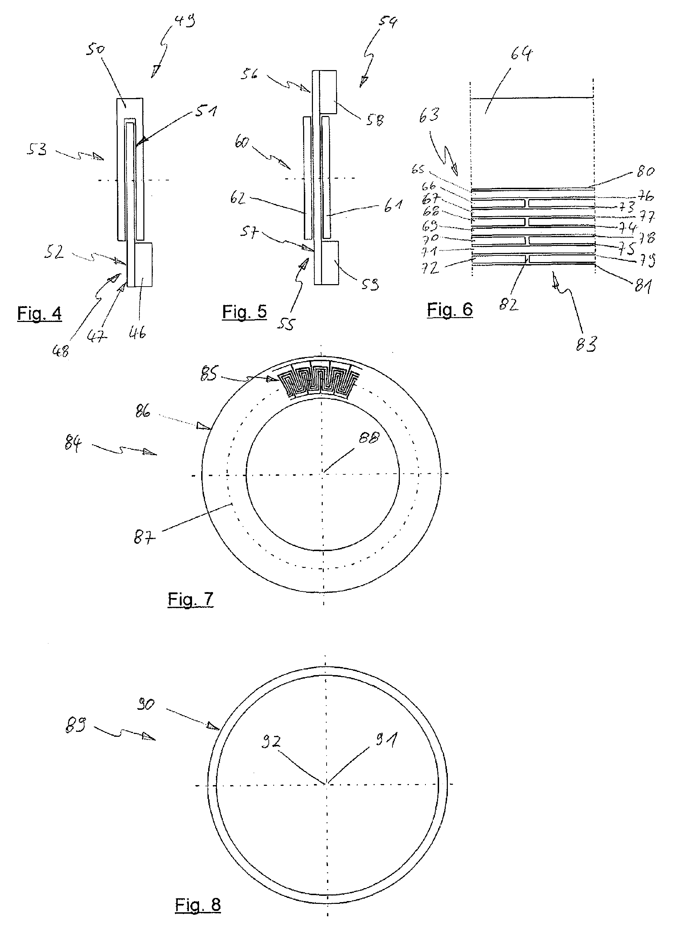

Eine derartige Anordnung mit einem Halteelement 46 an einem Träger 47 bzw. einer Leiteranordnung 48 zeigt eine schematische Darstellung eines Linearmotors 49 in einer Querschnittsansicht gemäß **Fig. 4****.** Der Linearmotor 49 umfasst U-förmig ausgebildete magnetisch wirksame Bauteile 50, welche einen Spalt 51 ausbilden in dem die Leiteranordnung 48 relativ zu dem Bauteil 50 orthogonal zur Zeichnungsebene bewegbar angeordnet ist. Ein Randbereich 52 der Leiteranordnung 48 bzw. des Trägers 47 ist mit dem Halteelement 46 flächig verbunden, so dass Wärmeenergie, welche innerhalb des Spaltes 51 in einem Überdeckungsbereich 53 der Leiteranordnung 48 gebildet wird, im Randbereich 52 konzentriert und aufgrund der flächigen Auflage des Halteelements 46 auf dem Randbereich 52 über dieses abgeführt werden kann.

Eine weitere Ausführungsform eines Linearmotors 54 zeigt **Fig. 5****,** wobei hier eine Leiteranordnung 55 verwendet wird, welche über einen ersten und zweiten Randbereich 56 bzw. 57 mit den entsprechenden, hier nicht gezeigten äußeren Leiterabschnitten verfügt. Die Randbereiche 56 und 57 sind jeweils mit einem Halteelement 58 bzw. 59 verbunden, so dass eine noch weiter verbesserte Abführung von Wärmeenergie aus einem Überdeckungsbereich 60 der Leiteranordnung 55 mit magnetisch wirksamen Bauteilen 61 und 62 erzielbar ist.

Eine Querschnittsansicht einer Leiteranordnung 63 mit einem Halteelement 64 in einem Teilausschnitt zeigt **Fig. 6****.** Die Leiteranordnung 63 ist aus Leitersträngen 65 bis 72 gebildet, die jeweils unter zwischenliegender Anordnung einer dielektrischen Schicht 73 bis 75 auf Substraten 76 bis 79 ausgebildet sind. Die Leiterstränge 65 und 72 sind weiterhin jeweils mit einer dielektrischen Deckschicht 80 bzw. 81 versehen, so dass keine unbeabsichtigte elektrische Kontaktierung der Leiterstränge 65 und 72 erfolgen kann. Die dielektrischen Schichten 73 bis 75 sowie die dielektrischen Deckschichten 80 und 81 werden so mit den Substraten 76 bis 79 bzw. den Leitersträngen 65 bis 72 verbunden, dass Spalte 82 von den dielektrischen Schichten 73 bis 75 bzw. 80 und 81 vollständig ausgefüllt werden und eine im Wesentlichen monolithische Substratanordnung 83 ausgebildet wird. Die Leiterstränge 65 bis 72 sind dabei in ihrer Dicke um ein Vielfaches größer als die dielektrischen Schichten bzw. Substrate 73 bis 81, so dass ein vergleichsweise hoher Anteil von in diesem Fall elektrisch leitenden Kupfer in der Leiteranordnung 63 enthalten ist.

Fig. 7 zeigt eine vereinfacht dargestellte Leiteranordnung 84 für einen Torquemotor, welche kreisringförmig ausgebildet ist. Hier nur abschnittsweise und schematisch dargestellte Leiter 85 sind innerhalb eines Trägers 86 in Richtung einer als Linie 87 dargestellten Rotationsbahn um eine Rotationsachse 88 orientiert.

Eine alternative Ausführungsform einer Leiteranordnung 89 für einen Torquemotor zeigt **Fig. 8****.** Die Leiteranordnung 89 umfasst einen zylindrischen Träger 90 mit hier nicht sichtbaren, innerhalb des Trägers 90 umfänglich angeordneten Leitern. Die Leiteranordnung 89 kann in Verbindung mit magnetisch wirksamen Bauteilen als Rotor mit einer Rotationsachse 91 oder als Stator verwendet werden. Auch ist die Ausbildung einer Linearbewegung der Leiteranordnung 89 relativ zu magnetisch wirksamen Bauteilen entlang einer Linie 92 ortogonal zur Zeichnungsebene möglich.

## Patentansprüche

1. Linearmotor (49, 54) mit einer Leiteranordnung (10, 33, 38, 48, 55, 63), wobei die Leiteranordnung relativ zu magnetisch wirksamen Bauteilen (50, 61, 62) des Linearmotors bewegbar ist, wobei die Leiteranordnung aus zumindest einem elektrischen Leiter (12, 13, 14, 15) und einem Träger (11, 44, 47) zur räumlichen Positionierung des Leiters gebildet ist, wobei der Träger der Leiteranordnung geradförmig ausgebildet ist, wobei der Leiter zumindest einen Leiterstrang (18, 19, 20, 21, 34, 35, 36, 37, 39, 65, 66, 67, 68, 69, 70, 71, 72) aufweist und in Art einer Spule angeordnet ist, wobei der Leiterstrang Leiterabschnitte (27, 28, 29, 30, 40) aufweist, die zumindest abschnittsweise quer und parallel zu einer Bewegungsrichtung des Trägers bzw. der Bauteile angeordnet sind, wobei mehrere Leiterstränge jeweils in parallelen Ebenen des Trägers ausgebildet sind, wobei zumindest ein parallel zu der Bewegungsrichtung angeordneter äußerer Leiterabschnitt (27, 28, 40) einen Querschnitt aufweist, der größer ist als der Querschnitt der übrigen Leiterabschnitte (29, 30),
**dadurch gekennzeichnet,**
**dass** der Leiterstrang (18, 19, 20, 21, 34, 35, 36, 37, 39, 65, 66, 67, 68, 69, 70, 71, 72) relativ und quer zur Bewegungsrichtung mäanderförmig angeordnet ist, wobei mehrere Leiterstränge in einer Ebene des Trägers (11, 44, 47) relativ zueinander parallel angeordnet sind.

2. Linearmotor nach Anspruch 1,
**dadurch gekennzeichnet,**
**dass** jeweils zwei relativ zu der Bewegungsrichtung parallel gegenüberliegend angeordnete äußere Leiterabschnitte (27, 28, 40) einen Querschnitt aufweisen, der größer ist als der Querschnitt der übrigen Leiterabschnitte (29, 30).

3. Linearmotor nach Anspruch 1 oder 2,
**dadurch gekennzeichnet,**
**dass** der äußere Leiterabschnitt (27, 28, 40) einen Querschnitt aufweist, der um ein vielfaches größer ist als der Querschnitt der übrigen Leiterabschnitte (29, 30).

4. Linearmotor nach einem der vorangehenden Ansprüche,
**dadurch gekennzeichnet,**
**dass** der Leiterstrang (18, 19, 20, 21, 34, 35, 36, 37, 39, 65, 66, 67, 68, 69, 70, 71, 72) eine gleichmäßige Höhe aufweist.

5. Linearmotor nach einem der vorangehenden Ansprüche,
**dadurch gekennzeichnet,**
**dass** der Leiterstrang (18, 19, 20, 21, 34, 35, 36, 37, 39, 65, 66, 67, 68, 69, 70, 71, 72) einen rechteckigen Querschnitt aufweist.

6. Linearmotor nach einem der vorangehenden Ansprüche,
**dadurch gekennzeichnet,**
**dass** der Träger (11, 44, 47) mehr als zwei Ebenen mit Leitersträngen (65, 66, 67, 68, 69, 70, 71, 72) aufweist.

7. Linearmotor nach einem der vorangehenden Ansprüche,
**dadurch gekennzeichnet,**
**dass** gleichförmige Leiterstränge (18, 19, 20, 21, 34, 35, 36, 37, 39, 65, 66, 67, 68, 69, 70, 71, 72) unterschiedlicher Ebenen relativ zueinander in Bewegungsrichtung versetzt ausgebildet sind.

8. Linearmotor nach einem der vorangehenden Ansprüche,
**dadurch gekennzeichnet,**
**dass** zumindest ein erster Leiterstrang in einer ersten Ebene des Trägers relativ und quer zur Bewegungsrichtung mäanderförmig angeordnet ist, und zumindest ein zweiter Leiterstrang in einer zweiten Ebene des Trägers relativ und längs zur Bewegungsrichtung mäanderförmig angeordnet ist.

9. Linearmotor nach einem der vorangehenden Ansprüche,
**dadurch gekennzeichnet,**
**dass** der Träger (11, 44, 47) der Leiteranordnung (10, 33, 38, 48, 55, 63, 84, 89) einen Überdeckungsbereich (42, 53, 60) aufweist, der mit den magnetisch wirksamen Bauteilen (50, 61, 62) in Überdeckung bringbar ist.

10. Linearmotor nach einem der vorangehenden Ansprüche,
**dadurch gekennzeichnet,**
**dass** der Träger (11, 44, 47) der Leiteranordnung (10, 33, 38, 48, 55, 63, 84, 89) einen Randbereich (43, 52, 56, 57) aufweist, der mit einem Halteelement (46, 58, 59, 64) in Überdeckung bringbar ist, wobei der Randbereich den äußeren Leiterabschnitt (27, 28, 40) zumindest teilweise überdeckt.

11. Verfahren zum Kühlen eines Linearmotors (49, 54) mit einer Leiteranordnung (10, 33, 38, 48, 55, 63) nach einem der Ansprüche 1 bis 10,
**dadurch gekennzeichnet,**
**dass** eine Abführung von Wärmeenergie mittels eines Halteelements (46, 58, 59, 64), eines fluiden Mediums, eines Peltierelements oder eines Wärmerohrs aus dem Randbereich (43, 52, 56, 57) der Leiteranordnung erfolgt.

## Claims

1. A linear motor (49, 54) comprising a conductor arrangement (10, 33, 38, 48, 55, 63), said conductor arrangement being movable relative to magnetically active components (50, 61, 62) of the linear motor, the conductor arrangement being formed from at least one electrical conductor (12, 13, 14, 15) and a carrier (11, 44, 47) for spatially positioning the conductor, the carrier of the conductor arrangement being formed straight, the conductor comprising at least one conductor strand (18, 19, 20, 21, 34, 35, 36, 37, 39, 65, 66, 67, 68, 69, 70, 71, 72) and being arranged in the manner of a coil, the conductor strand comprising conductor sections (27, 28, 29, 30, 40) that are arranged at least in sections perpendicular and parallel to a direction of motion of the carrier or the components, multiple conductor strands, respectively, being formed in parallel planes of the carrier, at least one outer conductor section (27, 28, 40) arranged parallel to the direction of motion having a cross section that is greater than the cross section of the remaining conductor sections (29, 30),
**characterized in that**
the conductor strand (18, 19, 20, 21, 34, 35, 36, 37, 39, 65, 66, 67, 68, 69, 70, 71, 72) is arranged in a meandering fashion relative and perpendicular to the direction of motion, multiple conductor strands being arranged parallel relative to one another in a plane of the carrier (11, 44, 47).

2. The linear motor according to claim 1,
**characterized in that**
two outer conductor sections (27, 28, 40) arranged parallel and opposite relative to the direction of motion have a cross section that is greater than the cross section of the remaining conductor sections (29, 30).

3. The linear motor according to claim 1 or 2,
**characterized in that**
the outer conductor section (27, 28, 40) has a cross section that is several times larger than the cross section of the remaining conductor sections (29, 30).

4. The linear motor according to any of the preceding claims,
**characterized in that**
the conductor strand (18, 19, 20, 21, 34, 35, 36, 37, 39, 65, 66, 67, 68, 69, 70, 71, 72) has a uniform height.

5. The linear motor according to any of the preceding claims,
**characterized in that**
the conductor strand (18, 19, 20, 21, 34, 35, 36, 37, 39, 65, 66, 67, 68, 69, 70, 71, 72) has a rectangular cross section.

6. The linear motor according to any of the preceding claims,
**characterized in that**
the carrier (11, 44, 47) has more than two planes comprising conductor strands (65, 66, 67, 68, 69, 70, 71, 72).

7. The linear motor according to any of the preceding claims,
**characterized in that**
uniformly shaped conductor strands (18, 19, 20, 21, 34, 35, 36, 37, 39, 65, 66, 67, 68, 69, 70, 71, 72) of different planes are formed in an offset fashion relative to each other in the direction of motion.

8. The linear motor according to any of the preceding claims,
**characterized in that**
at least one first conductor strand is arranged in a first plane of the carrier in meandering fashion relative and perpendicular to the direction of motion, and at least one second conductor strand is arranged in a second plane of the carrier in a meandering fashion relative to and along the direction of motion.

9. The linear motor according to any of the preceding claims,
**characterized in that**
the carrier (11, 44, 47) of the conductor arrangement (10, 33, 38, 48, 55, 63, 84, 89) comprises an overlapping region (42, 53, 60) which can be made to overlap with the magnetically active components (50, 61, 62).

10. The linear motor according to any of the preceding claims,
**characterized in that**
the carrier (11, 44, 47) of the conductor arrangement (10, 33, 38, 48, 55, 63, 84, 89) comprises an edge region (43, 52, 56, 57) which can be made to overlap with a retaining element (46, 58, 59, 64), said edge region at least partially overlapping the outer conductor section (27, 28, 40).

11. A method for cooling a linear motor (49, 54) comprising a conductor arrangement (10, 33, 38, 48, 55, 63) according to any of the claims 1 to 10,
**characterized in that**
heat energy is dissipated from the edge region (43, 52, 56, 57) by means of a retaining element (46, 58, 59, 64), a fluid medium, a Peltier element or a heat pipe.

## Revendications

1. Moteur linéaire (49, 54) comprenant un dispositif à conducteur (10, 33, 38, 48, 55, 63), ledit dispositif à conducteur étant mobile par rapport à des composants (50, 61, 62) magnétiquement actifs du moteur linéaire, le dispositif à conducteur étant formé par au moins un conducteur (12, 13, 14, 15) électrique et par un support (11, 44, 47) pour le positionnement spatial du conducteur, le support du dispositif à conducteur étant formé droit, le conducteur comprenant au moins un conducteur de phase (18, 19, 20, 21, 34, 35, 36, 37, 39, 65, 66, 67, 68, 69, 70, 71, 72) et étant agencé sous forme d'une bobine, le conducteur de phase comprenant des sections de conducteur (27, 28, 29, 30, 40) qui sont disposées, au moins en sections, transversalement et parallèlement à une direction de mouvement du support ou des composants, plusieurs conducteurs de phase étant respectivement formés dans des plans parallèles du support, au moins une section de conducteur (27, 28, 40) extérieure disposée parallèlement à la direction de mouvement ayant une coupe transversale qui est plus grande que la coupe transversale des autres sections de conducteur (29, 30),
**caractérisé en ce que**
le conducteur de phase (18, 19, 20, 21, 34, 35, 36, 37, 39, 65, 66, 67, 68, 69, 70, 71, 72) est disposé sous forme de méandres par rapport à et transversalement à la direction de mouvement, plusieurs conducteurs de phase étant disposés parallèlement l'un par rapport à l'autre dans un plan du support (11, 44, 47).

2. Moteur linéaire selon la revendication 1,
**caractérisé en ce que**
deux sections de conducteur (27, 28, 40) extérieures étant disposées parallèlement opposées par rapport à la direction de mouvement ont une coupe transversale qui est plus grande que la coupe transversale des autres sections de conducteur (29, 30).

3. Moteur linéaire selon les revendications 1 ou 2,
**caractérisé en ce que**
la section de conducteur (27, 28, 40) extérieure a une coupe transversale qui est plusieurs fois plus grande que la coupe transversale des autres sections de conducteur (29, 30).

4. Moteur linéaire selon l'une quelconque des revendications précédentes,
**caractérisé en ce que**
le conducteur de phase (18, 19, 20, 21, 34, 35, 36, 37, 39, 65, 66, 67, 68, 69, 70, 71, 72) a une hauteur uniforme.

5. Moteur linéaire selon l'une quelconque des revendications précédentes,
**caractérisé en ce que**
le conducteur de phase (18, 19, 20, 21, 34, 35, 36, 37, 39, 65, 66, 67, 68, 69, 70, 71, 72) a une coupe transversale rectangulaire.

6. Moteur linéaire selon l'une quelconque des revendications précédentes,
**caractérisé en ce que**
le support (11, 44, 47) comprend plus de deux plans avec des conducteurs de phase (18, 19, 20, 21, 34, 35, 36, 37, 39, 65, 66, 67, 68, 69, 70, 71, 72).

7. Moteur linéaire selon l'une quelconque des revendications précédentes,
**caractérisé en ce que**
des conducteurs de phase (18, 19, 20, 21, 34, 35, 36, 37, 39, 65, 66, 67, 68, 69, 70, 71, 72) uniformes des plans différents sont formés décalés l'un par rapport à l'autre dans la direction de mouvement.

8. Moteur linéaire selon l'une quelconque des revendications précédentes,
**caractérisé en ce qu'**
au moins un premier conducteur de phase est disposé sous forme de méandres dans un premier plan du support par rapport à et transversalement à la direction de mouvement, et au moins un deuxième conducteur de phase est disposé sous forme de méandres dans un deuxième plan du support par rapport à et le long de la direction de mouvement.

9. Moteur linéaire selon l'une quelconque des revendications précédentes,
**caractérisé en ce que**
le support (11, 44, 47) du dispositif à conducteur (10, 33, 38, 48, 55, 63, 84, 89) comprend une région de chevauchement (42, 53, 60) qui peut être mise en chevauchement avec les composants (50, 61, 62) magnétiquement actifs.

10. Moteur linéaire selon l'une quelconque des revendications précédentes,
**caractérisé en ce que**
le support (11, 44, 47) du dispositif à conducteur (10, 33, 38, 48, 55, 63, 84, 89) comprend une région périphérique (43, 52, 56, 57) qui peut être mise en chevauchement avec un élément de retenue (46, 58, 59, 64), la région périphérique chevauchant, au moins partiellement, la section de conducteur (27, 28, 40) extérieure.

11. Procédé de refroidissement d'un moteur linéaire (49, 54) comprenant un dispositif à conducteur (10, 33, 38, 48, 55, 63) selon l'une quelconque des revendications 1 à 10,
**caractérisé en ce qu'**
une évacuation de la chaleur à partir de la région périphérique (43, 52, 56, 57) du dispositif à conducteur est effectuée par un élément de retenue (46, 58, 59, 64), par un fluide, par un module Peltier ou par un caloduc.
